# EUROPÄISCHE PATENTSCHRIFT

(11) **EP 1 483 081 B1**
(45) Veröffentlichungstag und Bekanntmachung des Hinweises auf die Patenterteilung: **12.10.2005**
(21) Anmeldenummer: 03743825.6
(22) Anmeldetag: 28.02.2003
(51) Int. Cl.: B23Q 1/38, B23Q 1/70, F16C 32/06

(54) **SCHNELLFREQUENZSPINDEL MIT SPEZIELLEM LUFTLAGER**
FAST FREQUENCY SPINDLE WITH A SPECIFIC AIR BEARING
BROCHE A FREQUENCE RAPIDE DOTEE D'UN PALIER D'AIR SPECIAL

(30) Priorität: 12.03.2002 DE 10210750
(43) Veröffentlichungstag der Anmeldung: 08.12.2004
(73) Patentinhaber: Precise Präzisionsspindeln GmbH, 42799 Leichlingen (DE); Aerolas GmbH, 82008 Unterhaching (DE)
(72) Erfinder: MUTH, Michael, 81737 München (DE); SLOTTA, Georg, 85375 Neufahrn (DE); MAYER, Anton, 42697 Solingen (DE); VAN SPRANG, Joachim, 42653 Solingen (DE)
(74) Vertreter: Kluin, Jörg-Eden
(86) Internationale Anmeldenummer: PCT/EP2003/002050
(87) Internationale Veröffentlichungsnummer: WO 2003/076127

(56) Entgegenhaltungen:
- US-A- 5 553 948
- US-A1- 2001 021 283

## Beschreibung

Die Erfindung bezieht sich auf eine Schnellfrequenzspindel der dem Oberbegriff des Anspruchs 1 entsprechenden Art (siehe, z.B., US 2001/0021283-A).

Unter Schnellfrequenzspindel sind solche Werkzeugmaschineneinheiten zu verstehen, die für die üblichen Bearbeitungsaufgaben wie Fräsen, Bohren, Schleifen und dergleichen dienen, meist jedoch kein eigenes Maschinengestell besitzen. Sie werden dann vielmehr an ihrem Gehäuse, das meist zumindest in axialen Abschnitten zylindrisch ausgebildet ist, in eine externe Aufspannvorrichtung eingespannt. Der direkt auf die Spindel wirkende - meist elektrisch betriebene - Antriebsmotor erzeugt hohe Drehzahlen, je nach Ausführung von 30.000 bis weit über 100.000 U/min.

Eine Schnellfrequenzspindel kann jedoch auch integrierter Bestandteil einer Bearbeitungsmaschine sein.

Die hohen Drehzahlen stellen an die Lageranordnung, über die die Spindel in dem Spindelgehäuse um ihre Spindelachse drehbar gelagert ist, hohe Anforderungen. Insbesondere muß die Lagerreibung auf ein absolutes Minimum reduziert werden, um Wärmeentwicklung und Verschleiß zu reduzieren.

Insbesondere bei Schnellfrequenzspindeln, die Drehzahlen von über 100.000 U/min erreichen, ist es bekannt, aerostatische Lager - im folgenden kurz "Luftlager" genannt - einzusetzen, bei denen Luft mit Hilfe einer externen Druckluftquelle über eine oder mehrere Drosselstellen in den Lagerspalt zwischen den Lagerflächen gedrückt wird. Auf diese Weise entsteht zwischen den Lagerflächen ein Luftpolster mit einem so hohen Luftdruck, daß eine Berührung der Lagerflächen unter den in Lagerrichtung wirkenden Kräften verhindert wird.

Aus der DE 3834140A1 ist eine Schnellfrequenzspindel mit einer Spindelwelle bekannt, die in einem Spindelgehäuse um eine Spindelachse mittels einer aerostatischen Lagereinrichtung drehbar gelagert ist. Letztere umfaßt sowohl radial als auch axial wirkende Luftlager.

Nachteilig hat sich bei den bislang bei Schnellfrequenzspindeln eingesetzten Luftlagern erwiesen, daß zur Aufrechterhaltung des Luftpolsters in dem Lagerspalt erhebliche Luftmengen benötigt werden, wodurch die Energiebilanz der Schnellfrequenzspindel negativ beeinflußt wird. Ferner kam es bei den bislang verwendeten Luftlagern zu Ausfällen, die mit einem Zusammenbruch des Luftpolsters und einer damit verbundenen Berührung der Lagerflächen aufeinander zu erklären sind.

Der Erfindung liegt daher die Aufgabe zugrunde, eine Spindel mit einer Luftlageranordnung zu schaffen, die weniger Energie verbraucht und die weniger störanfällig ist.

Diese Aufgabe wird durch die in Anspruch 1 wiedergegebene Erfindung gelöst.

Überraschenderweise hat sich gezeigt, daß ein sehr stabiles Luftpolster zwischen den Lagerflächen bei gleichzeitig deutlicher Verringerung der hierfür benötigten Luftmenge und einer damit verbundenen erheblichen Energieeinsparung erzielt werden kann, wenn das Luftlager auf der der Lagerseite gegenüberliegenden Seite eine Mehrzahl von Ausnehmungen aufweist, die bis auf eine geringe Restwandstärke an die Lagerfläche heranreichen, wobei dann am Boden einer jeden Ausnehmung eine Mehrzahl von Mikro-Durchgangsbohrungen vorgesehen sind.

Die Restwandstärke beträgt vorzugsweise zumindest 0,1 mm, maximal jedoch 2,5 mm.

Die Mikro-Durchgangsbohrungen weisen vorzugsweise einen Durchmesser von maximal 0,1 mm auf, wobei besonders bevorzugt Durchmesser von 0,04 bis 0,06 mm sind.

Ist das Luftlager als axial wirkendes Luftlager ausgebildet, so sind die Ausnehmungen vorzugsweise auf einem konzentrisch zur Spindelachse verlaufenden Kreis angeordnet. Sie erstrecken sich dann vorzugsweise etwa in Richtung der Spindelachse. An der Spindelwelle ist dann vorzugsweise eine ebene axiale Lagerfläche vorgesehen, die in einer senkrecht zur Spindelachse verlaufenden Ebene ausgerichtet ist.

Es ist denkbar, eine Maßnahme vorzusehen, durch die die Spindelwelle in Richtung der Spindelachse mit einer elastischen Kraft beaufschlagt wird, die .. die Axiallagerfläche gegen die Lagerfläche drückt, in die die Mikro-Durchgangsbohrungen münden. Besonders bevorzugt ist es jedoch, wenn zusätzlich in Gegenrichtung verlaufende Ausnehmungen vorgesehen sind und an der Spindelwelle eine von der Axiallagerfläche fortweisende, parallele weitere Axiallagerfläche vorgesehen ist, so dass die Luftlagerung in beiden axialen Richtungen der Spindelachse erfolgt.

Grundsätzlich ist es möglich, die axiale Luftlagerung mit anders - beispielsweise mechanisch - wirkenden Radiallagerungen zu kombinieren und umgekehrt. Es ist jedoch besonders bevorzugt, wenn sowohl die Lagerung in axialer, als auch in radialer Richtung aerostatisch erfolgt.

Unabhängig davon sind dann, wenn das Luftlager als radial wirkendes Luftlager ausgebildet ist, die Ausnehmungen auf einem Umfangskreis angeordnet und erstrecken sich etwa radial. Besonders gute Lagereigenschaften werden erzielt, wenn die Ausnehmungen auf einer Mehrzahl von Umfangskreisen angeordnet sind.

In der Zeichnung ist - ausschnittsweise und schematisch - ein Ausführungsbeispiel einer erfindungsgemäßen Schnellfrequenzspindel dargestellt. Es zeigen:
- Fig. 1: eine perspektivische Ansicht des vorderen, die Werkzeugaufnahme umfassenden Teils der Schnellfrequenzspindel in einem Längsschnitt;
- Fig. 2: das Detail 1 in Fig. 1 in derselben Perspektive sowie
- Fig. 3: einen Querschnitt durch die Schnellfrequenzspindel gemäß Ansicht A-A in Fig. 1.

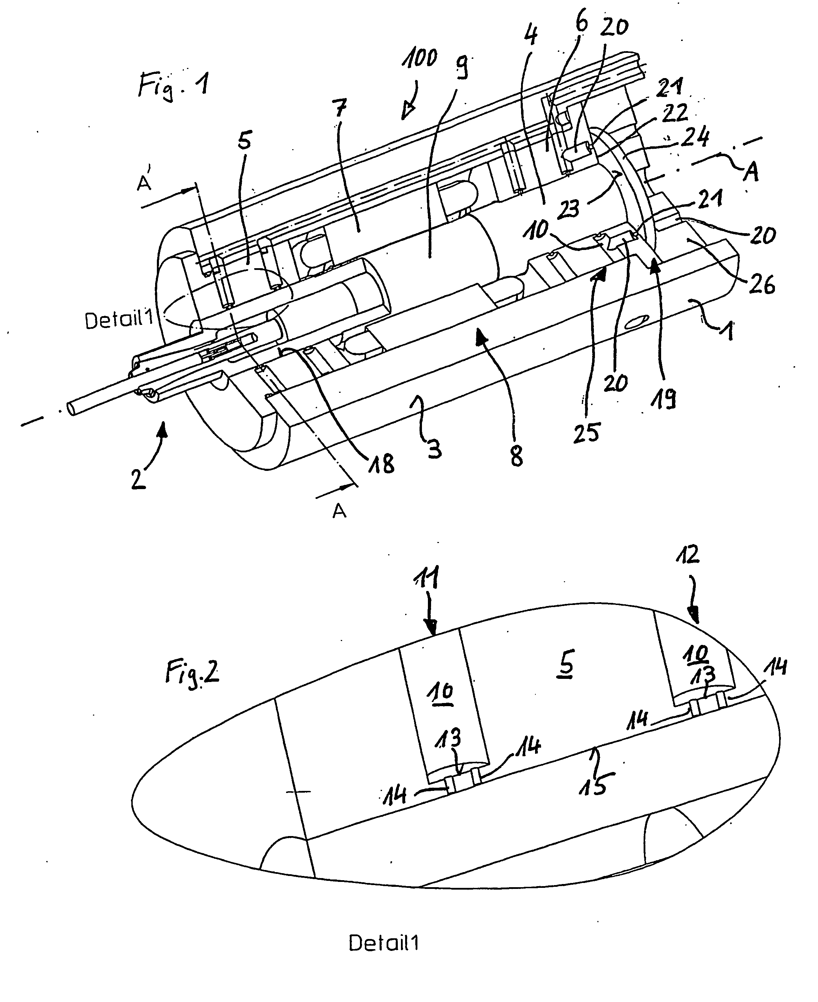

Die in Fig. 1 als Ganzes mit 100 bezeichnete Schnellfrequenzspindel umfaßt ein Gehäuse 1, dessen dargestellter vorderer Gehäuseteil, der einer Werkzeugaufnahme 2 zugewandt ist, eine zylindrische Außenumfangsfläche 3 aufweist.

Die Werkzeugaufnahme 2 ist an dem aus dem Gehäuseteil gemäß Fig. 1 nach links hervorstehenden Ende einer als Ganzes mit 4 bezeichneten Spindelwelle angeordnet, welche in dem Gehäuse 1 mittels Luftlageranordnungen 5, 6 radial um die Spindelachse A drehbar und in axialer Richtung gelagert ist.

Zwischen den Luftlageranordnungen ist der Stator 7 eines mit einer hochfrequenten Wechselspannung betriebenen Antriebsmotors 8 drehfest in dem Gehäuse 1 angeordnet. Demgemäß ist der Bereich der Spindelwelle 4 zwischen den Luftlageranordnungen 5, 6 in in der Zeichnung nicht erkennbarer Weise als Rotor 9 ausgebildet.

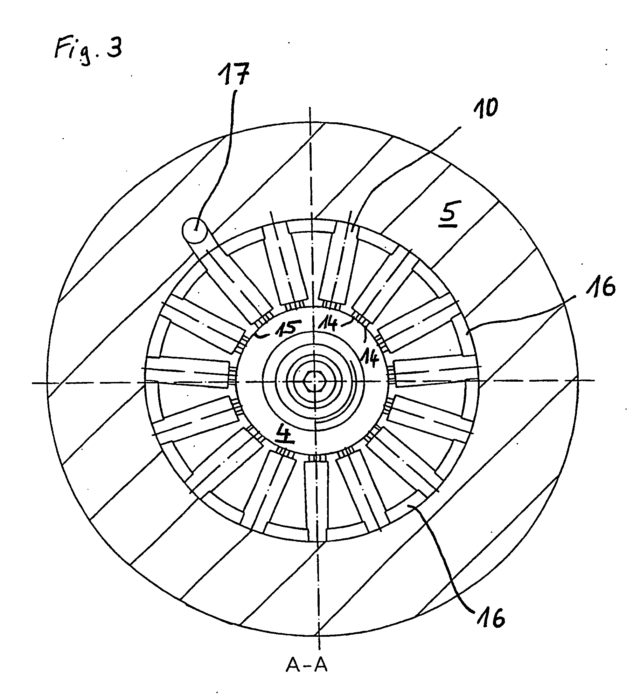

Im folgenden soll die Ausgestaltung der Luftlageranordnungen 5, 6 im einzelnen erläutert werden. Wie insbesondere den Fig. 2 und 3 entnommen werden kann, die verschiedene Ansichten der Luftlageranordnungen 5 in vergrößertem Maßstab zeigen, umfaßt diese radial wirkende Luftlageranordnung radiale Ausnehmungen 10, die gleichmäßig verteilt auf zwei Umfangskreisen 11, 12 angeordnet sind. Vom flachen Boden 13 jeder radialen Ausnehmung 10 erstrecken sich zwei Mikro-Durchgangsbohrungen 14, die in die Lagerfläche 15 der Luftlageranordnung 5 münden.

Wie insbesondere Fig. 3 entnommen werden kann, sind die radialen Ausnehmungen 10 jeder der Reihen 11, 12 über einen Ringraum 16 miteinander verbunden, der wiederum mit einem Kanal 17, der sich in dem Gehäuse 1 parallel zur Spindelachse A erstreckt, kommuniziert. Der Kanal 17 mündet in einen in der Zeichnung nicht dargestellten Anschluß für eine Druckluftquelle, über die den Ausnehmungen Druckluft zugefügt wird, die schließlich über die als Drosselstellen wirkenden Mikro-Durchgangsbohrungen 14 in den zwischen der Lagerfläche 15 und den von der Oberfläche der Spindelwelle 4 gebildeten Lagerfläche 18 befindlichen Lagerspalt strömt und hier ein Luftpolster ausbildet.

Der radial wirkende Lagerteil der Luftlageranordnung 6 ist in einer der Luftlageranordnung 5 entsprechenden Weise ausgebildet. Um Wiederholungen zu vermeiden sei daher insoweit auf die vorstehende Beschreibung verwiesen. Zusätzlich weist die Luftlageranordnung 6 jedoch noch einen axial wirkenden Lagerteil 19 auf. Hierzu sind auf einem konzentrisch zur Spindelachse A verlaufenden Kreis verteilte axiale Ausnehmungen 20 vorgesehen, die sich parallel zur Spindelachse A erstrecken. Sie weisen an ihrem flachen Boden wiederum eine Mehrzahl, in dem dargestellten Ausführungsbeispiel zwei Mikro-Durchgangsbohrungen 21 auf, die in eine axiale Lagerfläche 22 münden. Der axialen Lagerfläche 22 gegenüberliegend ist an der Spindelwelle 4 eine Lagerfläche 23 vorgesehen, die von einem radial vorstehenden Umfangsbund 24 der Spindelwelle 4 gebildet ist.

Die axialen Ausnehmungen 20 werden ebenfalls über den Kanal 17 mit Druckluft versorgt, indem sie mit den radialen Ausnehmungen 10 des hinteren Umfangskreises 25 kommunizieren. Die durch die Mikro-Durchgangsbohrungen 21 austretende Druckluft bildet zwischen den Lagerflächen 22, 23 wiederum ein Luftpolster, welches eine Lagerung der Spindelwelle in dem Gehäuse in Richtung der Spindelachse A nach vorn bewirkt.

Der axialen Lagerung in entgegengesetzter Richtung dient eine entsprechend umgekehrt angeordnete Ausbildung eines Luftlagerteils 26, die in der Zeichnung wegen der teilweisen Überdeckung durch den Umfangsbund 24 nicht im einzelnen erkennbar ist.

### BEZUGSZEICHENLISTE

- 1: Gehäuse
- 2: Werkzeugaufnahme
- 3: Außenumfangsfläche
- 4: Spindelwelle
- 5: Luftlageranordnung
- 6: Luftlageranordnung
- 7: Stator
- 8: Antriebsmotor
- 9: Rotor
- 10: radiale Ausnehmungen
- 11: Umfangskreis
- 12: Umfangskreis
- 13: Boden
- 14: Mikro-Durchgangsbohrungen
- 15: Lagerfläche
- 16: Ringraum
- 17: Kanal
- 18: Lagerfläche
- 19: axialer Lagerteil
- 20: axiale Ausnehmungen
- 21: Mikro-Durchgangsbohrungen
- 22: Lagerfläche
- 23: Lagerfläche
- 24: Umfangsbund
- 25: Umfangsbund
- 26: Luftlagerteil

- 100: Schnellfrequenzspindel
- A: Spindelachse

## Patentansprüche

1. Schnellfrequenzspindel,
mit einer Spindelwelle (4), die in einem Spindelgehäuse (1) um eine Spindelachse (A) mittels einer Lagereinrichtung drehbar gelagert ist, die ein radial und/oder axial wirkendes Luftlager (5, 6) umfaßt,
wobei das Luftlager (5, 6) auf der der Lagerfläche (15, 22) gegenüberliegenden Seite eine Mehrzahl von Ausnehmungen (10, 20) aufweist, die bis auf eine geringe Restwandstärke an die Lagerfläche heranreichen,
**dadurch gekennzeichnet, dass** am Boden (13) einer jeden Ausnehmung (10, 20) eine Mehrzahl von Mikro-Durchgangsbohrungen (14, 21) vorgesehen sind.

2. Schnellfrequenzspindel nach Anspruch 1, **dadurch gekennzeichnet, dass** die Restwandstärke R 0,1 mm ≤ R ≤ 2,5 mm beträgt.

3. Schnellfrequenzspindel nach Anspruch 1 oder 2, **dadurch gekennzeichnet, dass** die Mikro-Durchgangsbohrungen (14, 21) einen Durchmesser von ≤ 0,1 mm aufweisen.

4. Schnellfrequenzspindel nach einem der Ansprüche 1 bis 3, bei der das Luftlager als axial wirkendes Luftlager ausgebildet ist, **dadurch gekennzeichnet, dass** die Ausnehmungen auf einem konzentrisch zur Spindelachse (A) verlaufenden Kreis angeordnet sind.

5. Schnellfrequenzspindel nach Anspruch 4, **dadurch gekennzeichnet, dass** sich die Ausnehmungen (20) etwa in Richtung der Spindelachse (1) erstrecken und an der Spindelwelle (4) eine in einer senkrecht zur Spindelachse (A) verlaufende Axiallagerfläche (23) vorgesehen ist.

6. Schnellfrequenzspindel nach Anspruch 5, **dadurch gekennzeichnet, dass** zusätzlich in Gegenrichtung verlaufende Ausnehmungen vorgesehen sind und an der Spindelwelle (4) eine von der Axiallagerfläche (23) fortweisende weitere Axiallagerfläche vorgesehen ist.

7. Schnellfrequenzspindel nach einem der Ansprüche 1 bis 6, bei der das Luftlager als radial wirkendes Luftlager ausgebildet ist, **dadurch gekennzeichnet, dass** die Ausnehmungen (10) auf einem Umfangskreis (11, 12) angeordnet sind und sich etwa radial erstrecken.

8. Schnellfrequenzspindel nach Anspruch 7, **dadurch gekennzeichnet, dass** die Ausnehmungen (10) auf einer Mehrzahl von Umfangskreisen (11, 12) angeordnet sind.

## Claims

1. A high-frequency spindle, having a spindle shaft (4) which is supported in a spindle housing (1) such that it is rotatable about a spindle axis (A) by means of,a bearing device which comprises a radially and/or axially acting air bearing (5, 6) whereas the air bearing (5, 6), on the side opposite the bearing area (15, 22), has a multiplicity of recesses (10, 20) which, except for a small residual wall thickness, extend up to the bearing area, **characterized in that** a multiplicity of micro through-holes (14, 21) are provided on the base (13) of each recess (10, 20).

2. The high-frequency spindle as claimed in claim 1, **characterized in that** the residual wall thickness R is 0.1 mm ≤ R ≤ 2.5 mm.

3. The high-frequency spindle as claimed in claim 1 or 2, **characterized in that** the micro through-holes (14, 21) have a diameter of ≤ 0.1 mm.

4. The high-frequency spindle as claimed in one of claims 1 to 3, in which the air bearing is designed as an axially acting air bearing, **characterized in that** the recesses are arranged on a circle running concentrically to.the spindle axis (A).

5. The high-frequency spindle as claimed in claim 4, **characterized in that** the recesses (20) extend approximately in the direction of the spindle axis (1), and an axial bearing area (23) running in a perpendicularly to the spindle axis (A) is provided on the spindle shaft (4).

6. The high-frequency spindle as claimed in claim 5, **characterized in that** recesses running in the opposite direction are additionally provided, and a further axial bearing area pointing away from the axial bearing area is provided on the spindle shaft (4).

7. The high-frequency spindle as claimed in one of claims 1 to 6, in which the air bearing is designed as a radially acting air bearing, **characterized in that** the recesses (10) are arranged on a circumferential circle (11, 12) and extend approximately radially.

8. The high-frequency spindle as claimed in claim 7, **characterized in that** the recesses (10) are arranged on a multiplicity of circumferential circles (11, 12).

## Revendications

1. Broche à haute fréquence comprenant un arbre de broche (4) qui est logé dans un boîtier de broche (1) de manière à pouvoir tourner autour d'un axe de broche (A) au moyen d'un dispositif à palier, lequel comprend un coussinet pneumatique (5, 6) à effet radial et/ou axial, le coussinet pneumatique (5, 6) présentant sur le coté à l'opposé de la surface d'appui (15, 22) une pluralité de creux (10, 20) qui arrivent jusqu'à la surface d'appui moins une légère épaisseur de paroi résiduelle, **caractérisée en ce qu'**une pluralité de micro-perforations (14, 21) est prévue dan le fond (13) de chaque creux (10, 20).

2. Broche à haute fréquence selon la revendication 1, **caractérisée en ce que** l'épaisseur de paroi résiduelle R est 0,1 mm ≤ R ≤ 2,5 mm.

3. Broche à haute fréquence selon la revendication 1 ou 2, **caractérisée en ce que** les micro-perforations (14, 21) présentent un diamètre ≤ 0,1 mm.

4. Broche à haute fréquence selon l'une des revendications 1 à 3, avec laquelle le coussinet pneumatique est réalisé sous la forme d'un coussinet pneumatique à effet axial, **caractérisée en ce que** les creux sont disposés sur un cercle concentrique par rapport à l'axe de broche (A).

5. Broche à haute fréquence selon la revendication 4, **caractérisée en ce que** les creux (20) s'étendent approximativement en direction de l'axe de la broche (1) et une surface d'appui axiale (23) s'étendant perpendiculairement par rapport à l'axe de broche (A) est prévue sur l'arbre de la broche (4).

6. Broche à haute fréquence selon la revendication 5, **caractérisée en ce que** des creux supplémentaires s'étendant en sens inverse sont prévus et une surface d'appui axiale supplémentaire est prévue sur l'arbre de la broche (4) dans la prolongation de la surface d'appui axiale (23).

7. Broche à haute fréquence selon l'une des revendications 1 à 6, avec laquelle le coussinet pneumatique est réalisé sous la forme d'un coussinet pneumatique à effet radial, **caractérisée en ce que** les creux (10) sont disposés sur un cercle périphérique (11, 12) et s'étendent approximativement dans le sens radial.

8. Broche à haute fréquence selon la revendication 7, **caractérisée en ce que** les creux (10) sont disposés sur une pluralité de cercles périphériques (11, 12).
